Europäisches Patentamt

European Patent Office

Office européen des brevets

(11) Veröffentlichungsnummer: **0 045 273**
**A2**

## (12) EUROPÄISCHE PATENTANMELDUNG

(21) Anmeldenummer: 81710028.2

(22) Anmeldetag: 21.07.81

(51) Int. Cl.³: **B 60 M 1/13**

(30) Priorität: 28.07.80 DE 3028542

(43) Veröffentlichungstag der Anmeldung: 03.02.82
Patentblatt 82/5

(84) Benannte Vertragsstaaten: **AT BE CH DE FR GB IT LI LU NL SE**

(71) Anmelder: **SCHWEIZERISCHE ALUMINIUM AG, CH-3965 Chippis (CH)**

(72) Erfinder: **Hodel, Ulf, Dipl.-Ing., Hermann-Hesse-Strasse 11, D-7707 Engen (DE)**
Erfinder: **Wagner, Alfred, Im Stäudler 21, D-7705 Steisslingen (DE)**
Erfinder: **Ames, Adolf, Oberdorfstrasse 7, D-7701 Hilzingen-Duchtlingen (DE)**

(74) Vertreter: **Hiebsch, Gerhard F., Dipl.-Ing., Patentanwalt Dipl.-Ing. Gerhard Hiebsch Erzbergerstrasse 5A Postfach 464, D-7700 Singen 1 (DE)**

(54) **Fahrdraht insbesondere für spurgebundene Hochgeschwindigkeitsbahnen sowie Verfahren zu dessen Herstellung.**

(57) Ein Fahrdraht für Stromabnehmer von elektrisch betriebenen Verkehrsmitteln, insbesondere von spurgebundenen Hochgeschwindigkeitsbahnen, sowie ein Verfahren zu dessen Herstellung sollen verbessert werden, daß eine sichere Gleitfläche für den Stromabnehmer angeboten und der Fahrdraht insgesamt kostengünstig hergestellt werden kann.

Der vorgeschlagene Fahrdraht (1) besteht aus einem Verbundprofil mit einem teilweise in einen Leichtmetallprofilteil eingebetteten sowie mit diesem metallisch verbundenen Rundprofil (2) aus Stahl, insbesondere aus Edelstahl, als Kontaktorgan für den Stromabnehmer, wobei das Stahlrundprofil mit einem Teil seines Umfanges aus dem Leichtmetallprofilteil ragt. Bei dem bevorzugten Verfahren zur Herstellung dieses Fahrdrahtes werden wenigstens zwei Stahlrundprofile (2) gleichzeitig auf dem Wege des Strangpressens mit jeweils einem Leichtmetallprofil (3) metallisch verbunden, wobei ein Teil des Stahlrundprofiles unmittelbar einem Formwerkzeugteil anliegt, welches gegebenenfalls in Preßrichtung mit dem Stahlprofilteil bewegt wird.

# DIPL.-ING. GERHARD F. HIEBSCH

## PATENTANWALT

PROFESSIONAL REPRESENTATIVE BEFORE THE EUROPEAN PATENT OFFICE

MANDATAIRE AGRÉÉ PRÈS L'OFFICE EUROPÉEN DES BREVETS

0045273

Schweizerische Aluminium AG
=============================

CH-3965 Chippis
================

D-7700 SINGEN 1
Erzbergerstr. 5a
Telegr./Cables:
Bodenseepatent
Telex 793850
Telefon (07731) 63075
          63076

Mein Zeichen
My ref./Ma réf.: AL-1424/EPA

I/ke

Datum/Date

Fahrdraht insbesondere für spurgebundene Hochgeschwindigkeitsbahnen sowie Verfahren zu dessen Herstellung

Die Erfindung betrifft einen Fahrdraht für Stromabnehmer von elektrisch betriebenen Verkehrsmitteln, insbesondere von spurgebundenen Hochgeschwindigkeitsbahnen, sowie ein Verfahren zu dessen Herstellung.

Üblicherweise werden als Fahrdrähte für elektrische Bahnen Kupferdrähte verwendet mit einer querschnittlich gekrümmten Gleitfläche für den Stromabnehmer. Diese Kupferdrähte können mittels Querspangen an Stahlseilen befestigt sein, welche als Träger für den Kupferdraht dienen. Als nachteilig hat sich insbesondere bei Stromabnahme durch Hochgeschwindigkeitsfahrzeuge erwiesen, daß derartige Kupferdrähte bei größeren Spannweiten gestreckte Sinuskurven bilden, also eine brauchbare Gleitfläche nicht anzubieten vermögen. Darüber hinaus ist die Herstellung solcher Oberleitungen mit erheblichem Aufwand und hohen Kosten verbunden.

-2-

AL-1424/EPA

Angesichts dieser Gegebenheiten hat sich der Erfinder das Ziel gesetzt, einen Fahrdraht sowie ein Verfahren zu dessen Herstellung zu schaffen, welcher eine sichere Gleitfläche für den Stromabnehmer bietet und kostengünstig herzustellen ist.

Zur Lösung dieser Aufgabe führt, daß der Fahrdraht ein Verbundprofil mit einem teilweise in einen Leichtmetallprofilteil eingebetteten sowie mit diesem metallisch verbundenen Rundprofil aus Stahl, insbesondere Edelstahl, als Kontaktorgan für den Stromabnehmer ist, und daß das Rundprofil mit einem Teil seines Umfanges aus dem Leichtmetallprofilteil herausragt. Wenn im Folgenden von einem Stahlrundprofil gesprochen wird, so liegt im Rahmen der Erfindung auch ein Profil aus einem entsprechendem Werkstoff, welches die Aufgabe übernehmen kann, sowohl die Spannkräfte für die Oberleitung aufzunehmen als auch als Gleitfläche zu dienen; es hat sich als günstig erwiesen, den Leichtmetallprofilteil selbst zur Stromleitung zu verwenden und einen Leichtmetallfreien Umfangsbereich des Stahlprofiles als aufgespannte Gleitfläche.

Ein derartiges Profil kann problemlos auf dem Wege des Strangpressens erzeugt werden - in einer bevorzugten Ausführung kann man zumindest zwei -- oder auch mehr -- derartige Verbundprofile gleichzeitig in einem einzigen Formwerkzeug erzeugen, wie dies in der deutschen Patentanmeldung P 24 32 541.5 beschrieben wird. Hierbei liegen die leichtmetallfreien Teile der Umfänge der Stahlprofile erfindungsgemäß während ihres Durchganges durch das Formwerkzeug einem stehenden Dornteil an oder aber einem in Preßrichtung mitlaufenden Hilfsorgan des Preßwerkzeuges.

BAD ORIGINAL

Um eine gute Kontaktfläche zwischen        Fahrdraht und
Stromabnehmer zu gewährleisten, sollen zumindest 30 %
-- bevorzugt 50 % -- der Umfangskontur des Rundprofiles
aus dem Leichtmetallprofilteil herausragen, also von Anfang an ohne Leichtmetallauflage sein; zum Stande der Technik gehören außerhalb des Erfindungsgebietes liegende Drähte,
welche insgesamt von einer anderen Komponente ummantelt sind.
Derartige Drähte aber sind als Fahrdrähte für Oberleitungen
von Schienenfahrzeugen nicht verwendbar.

Als besonders günstig hat es sich erwiesen, daß der Leichtmetallprofilteil einen polygonalen Querschnitt mit zwischen zwei Eckpunkten angeordneter Bogenkontur als Berührungsbereich für das Rundprofil aufweist, wobei diese
Eckpunkte bevorzugtermaßen etwa auf dem zur Querschnittsachse des Verbundprofiles rechtwinkeligen Durchmesser des
Rundprofiles liegen; diese Maßgabe gewährleistet, daß etwa
die Hälfte der Profilkontur leichtmetallfrei bleibt, so daß
im Fahrbetrieb nahezu die Hälfte des Profiles abgerieben
werden kann, ohne daß es eines Auswechselns des Fahrdrahtes
bedürfte. Bevorzugtermaßen ist die Querschnittsachse des Verbundprofiles auch seine Symmetrieachse, in welcher dann die
Andruckkraft des Stromabnehmers angreift.

Besonders bei simultaner Herstellung mehrerer derartiger
Verbundprofile hat es sich als günstig erwiesen, beidseits
der Bogenkontur Profilflächen anzuordnen, welche Querschnittstangenten des Rundprofiles sind und in einem bevorzugten
Winkel von 45° zur Symmetrieachse verlaufen.

Um den erfindungsgemäßen Fahrdraht in vorhandene Anlagen
einbauen zu können, weist der Leichtmetallprofilteil auf
seiner zum Rundprofil entgegengesetzten Seite eine querschnittlich schwalbenschwanzartige Leiste auf, welche seitliche Rinnen bildet. In diese Rinnen können Befestigungsorgane vorhandener Anlagen eingreifen. Das erfindungsgemäße Verbundprofil ist üblicherweise etwas mehr als 20 mm hoch und von nahezu gleicher Breite; der Durchmesser des Rundprofiles beträgt bevorzugtermaßen 12 mm. Diese Maßgaben gewährleisten einerseits ausreichende Stabilität und andererseits ein noch vertretbares Gewicht des Fahrdrahtes von durchschnittlich 1,5 kg/m.

Der erfindungsgemäße Fahrdraht ist vornehmlich für Fahrgeschwindigkeiten des Stromabnehmers von 300 km/h gedacht und soll die üblichen Kupferfahrdrähte ablösen, welche -- wie gesagt -- zu stark durchhängen und darüber hinaus auch zu schwer sind. Auch hat sich die Verwendung des Kupfers im Hinblick auf die Rohstoffsituation ganz allgemein als nachteilig erwiesen. Ein weiterer Nachteil von Kupferfahrdrähten wird erfindungsgemäß beseitigt, nämlich die erforderliche Stromabnahme aus parallel geschalteten Kupferkabeln, da der übliche Kupferfahrdraht querschnittsbedingt nicht den vollen Strom aufnehmen kann. Dem erfindungsgemäßen Verbundprofil sind bezüglich der Stromaufnahme bei den bisher erforderlichen Bedingungen keine Grenzen gesetzt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1: den Querschnitt durch ein Verbundprofil;

Fig. 2: den Querschnitt durch ein Formwerkzeug während der gleichzeitigen Herstellung von vier Verbundprofilen.

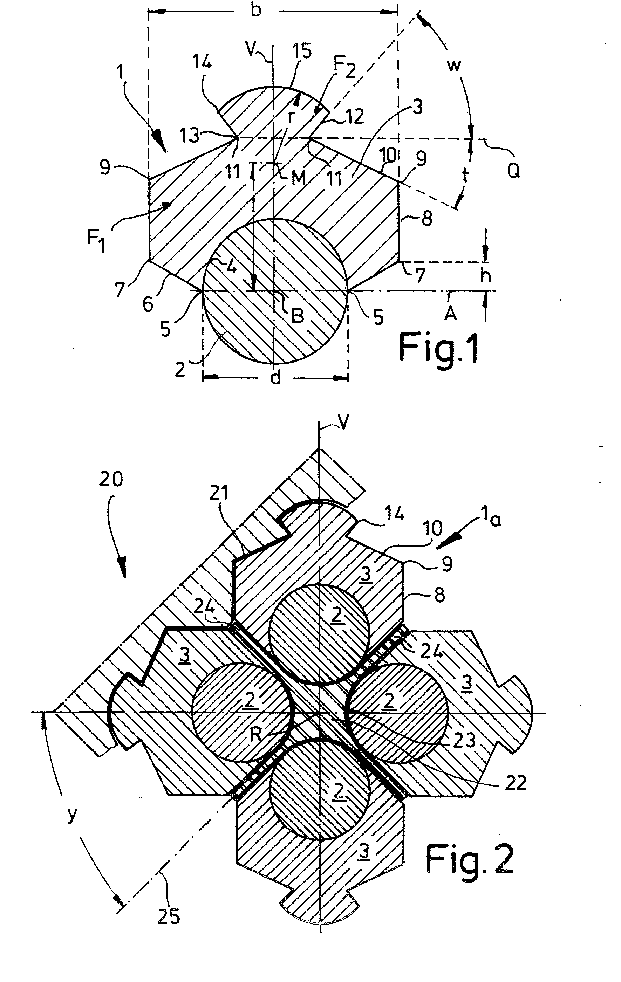

Ein Verbundprofil 1 nach Fig. 1 besteht aus einem Edelstahl-Rundprofil 2 vom Durchmesser d (etwa 12 mm) als Fahrdraht einer übersichtlichkeitshalber nicht dargestellten Oberleitung für elektrisch angetriebene Schienenfahrzeuge sowie einem Leichtmetallprofil 3.

Das Rundprofil 2 ist mit dem Leichtmetallprofil 3 entlang einer Halbkreiskontur 4 metallisch verbunden. Der Querschnitt des Leichtmetallprofils 3 setzt sich aus einer achteckigen Fläche $F_1$ mit der von unteren Eckpunkten 5 ausgehenden Halbkreiskontur 4 einerseits sowie einer Scheitelfläche $F_2$ andererseits zusammen.

Von jedem der Eckpunkte 5 der Fläche $F_1$ geht eine aufwärts geneigte Flächenseite 6 zu einem Eckpunkt 7 ab, der zur Verbindungslinie A der Eckpunkte 5 mit dem Rundprofilmittelpunkt B einen Abstand h von hier 2,5 mm hat. Von diesem Eckpunkt 7 verläuft eine anschließende Flächenseite 8 parallel zur Symmetrieachse V des Verbundprofils 1 und endet an einem Eckpunkt 9. Von diesem zu einem oberen Eckpunkt 11 steigt eine Seite 10 an, die mit einer Parallelen Q zur Profilachse A durch den Eckpunkt 11 einen Winkel t von etwa 26° einschließt.

Von den beiden Eckpunkten 11 -- jeweils einer auf einer Seite der Symmetrieachse V -- steigen unter Winkeln w von 50° zur Parallelen Q Seiten 12 der schwalbenschwanzartig ausgebildeten Scheitelfläche $F_2$ unter Bildung seitlicher V-Rinnen 13 an, deren Endpunkte 14 mit einer Teilkreislinie 15 vom Radius r (z. B. 6 mm) um einen Mittelpunkt M verbunden sind. Letzterer liegt auf der Symmetrieachse V in einem Abstand i (beispielsweise 10 mm) vom Profilmittelpunkt B.

Der Abstand b der Flächenseiten 8 voneinander beträgt etwa 20 mm.

Ein ähnliches Verbundprofil $1_a$ ist in Fig. 2 während seiner Herstellung in einem teilweise wiedergegebenen Formwerkzeug 20 mit Formgebungsquerschnitt 21 dargestellt; um eine mitlaufende Kernstange 22 mit vier konkaven Außenflächen 23 sowie vier Radialflächen 24 sind vier Edelstahl-Rundprofile 2 angeordnet, um die gleichzeitig ihre Leichtmetallpartner 3 auf dem Wege des Strangpressens erzeugt und metallisch mit einem Teil der Oberfläche der Rundprofile 2 verbunden werden.

Jene Radialflächen 24 verlaufen in Geraden 25 durch den Mittelpunkt R des Formgebungsquerschnitts 21, die mit den Symmetrieachsen V Winkel y von 45° einschließen; parallel zu diesen Geraden 25 verlaufen in diesem Ausführungsbeispiel die Profilseiten 6 des Leichtmetallprofils 3.

P A T E N T A N S P R Ü C H E
=================================

1. Fahrdraht für Stromabnehmer von elektrisch betriebenen Verkehrsmitteln, insbesondere von spurgebundenen Hochgeschwindigkeitsbahnen,

dadurch gekennzeichnet,

daß der Fahrdraht (1) ein Verbundprofil mit einem teilweise in einen Leichtmetallprofilteil eingebetteten sowie mit diesem metallisch verbundenen Rundprofil (2) aus Stahl, insbesondere Edelstahl, als Kontaktorgan für den Stromabnehmer ist, und daß das Stahlrundprofil mit einem Teil seines Umfanges aus dem  Leichtmetallprofilteil ragt.

2. Fahrdraht nach Anspruch 1, dadurch gekennzeichnet, daß zumindest 30 %, bevorzugt 50 %, der Umfangskontur des Stahlrundprofiles (2) aus dem Leichtmetallprofilteil (3) herausragen, wobei der Durchmesser (d) des Stahlrundprofils gegebenenfalls 10 bis 20 mm beträgt.

3. Fahrdraht nach Anspruch 1 oder 2, dadurch gekennzeichnet, daß der Leichtmetallprofilteil (3) einen polygonalen Querschnitt mit zwischen zwei Eckpunkten (5) angeordneter Bogenkontur (4) als Berührungsbereich für das Stahlrundprofil (2) aufweist.

4. Fahrdraht nach einem der Ansprüche 1 bis 3, dadurch gekennzeichnet, daß die von den Eckpunkten (5) für die Bogenkontur (4) ausgehenden Querschnittskonturen (6) des Leichtmetallprofilteils (3) mit der Querschnittsachse (V) des Verbundprofils (1) Winkel (y) einschließen, die bevorzugt beiderseits der Querschnittsachse 30 bis 80$^{\circ}$ betragen, und wobei gegebenenfalls die Querschnittsachse des Verbundprofiles dessen Symmetrieachse ist.

5. Fahrdraht nach Anspruch 4, dadurch gekennzeichnet, daß die von den Eckpunkten (5) für die Bogenkontur (4) ausgehenden Querschnittskonturen (6) des Leichtmetallprofilteils (3) Tangenten des Stahlrundprofils (2) sind und/oder die Eckpunkte für die Bogenkontur etwa auf dem zur Querschnittsachse (V) rechtwinkeligen Durchmesser (A) des Stahlrundprofiles liegen.

6. Fahrdraht nach wenigstens einem der Ansprüche 1 bis 5, dadurch gekennzeichnet, daß an das Leichtmetallprofilteil (3) gegenüber dem Stahlrundprofil (2) eine querschnittlich schwalbenschwanzartige Leiste ($F_2$) unter Bildung seitlicher Rinnen (13) angeformt ist.

7. Fahrdraht nach Anspruch 6, dadurch gekennzeichnet, daß die Flanken (10 und 12) der Rinne (13) beidseits einer Parallele (Q) zum Durchmesser (A) des Stahlrundprofiles (2), damit gegebenenfalls unterschiedliche Winkel (t,w) einschließend, liegen und eine Flanke (10) der Rinne Querschnittskontur des Leichtmetallprofilteils (3) ist.

8. Fahrdraht nach weinigstens einem der Ansprüche 1 bis 7, dadurch gekennzeichnet, daß die Höhe des Verbundprofils (1) und/oder dessen Breite (b) etwa dem doppelten Durchmesser (d) des Stahlrundprofils (2) entspricht.

9. Fahrdraht nach wenigstens einem der Ansprüche 1 bis 8, dadurch gekennzeichnet, daß der Leichtmetallprofilteil (3) des Verbundprofils (1) als Stromleiter dient.

10. Verfahren zur Herstellung eines Fahrdrahtes nach wenigstens einem der Ansprüche 1 bis 9, dadurch gekennzeichnet, daß wenigstens zwei Stahlrundprofile gleichzeitig auf dem Wege des Strangpressens mit jeweils einem Leichtmetallprofilteil metallisch verbunden werden, wobei ein Teil des Stahlrundprofiles unmittelbar einem Formwerkzeugteil anliegt, das gegebenenfalls in Preßrichtung mit dem Stahlprofilteil bewegt wird.

Fig.1

Fig.2